(19) Europäisches Patentamt
European Patent Office
Office européen des brevets

(11) **EP 2 110 388 A1**

(12) **EUROPÄISCHE PATENTANMELDUNG**

(43) Veröffentlichungstag:
21.10.2009 Patentblatt 2009/43

(21) Anmeldenummer: 08007580.7

(22) Anmeldetag: 18.04.2008

(51) Int Cl.:
*C08F 220/14* (2006.01)    *C08F 2/44* (2006.01)
*C08K 9/06* (2006.01)

(84) Benannte Vertragsstaaten:
AT BE BG CH CY CZ DE DK EE ES FI FR GB GR
HR HU IE IS IT LI LT LU LV MC MT NL NO PL PT
RO SE SI SK TR
Benannte Erstreckungsstaaten:
AL BA MK RS

(71) Anmelder: Nanoresins AG
21502 Geesthacht (DE)

(72) Erfinder:
• Langerbeins, Klaus Dr.
21502 Geesthacht (DE)

• Kühner, Uwe Dietrich Dr.
20457 Hamburg (DE)
• Siol, Werner Dr.
64297 Darmstadt (DE)

(74) Vertreter: Glawe, Delfs, Moll
Patent- und Rechtsanwälte
Rothenbaumchaussee 58
20148 Hamburg (DE)

(54) **Polymerisierbare Masse mit vernetzenden Nanopartikeln**

(57) Gegenstand der Erfindung ist eine polymerisierbare Masse, die enthält
a) Acrylate und/oder Methacrylate,
b) 0,05 bis 70 Gew.-% $SiO_2$-Partikel mit einer mittleren Teilchengröße von 1 bis 150 nm, die polymerisierbare Gruppen vom Typ Methacryloyl-, Acryloyl, Styryl-, Itaconyl-, Crotonyl-, Vinyl-, Allyl- und/ oder Alkenyl- auf der Oberfläche aufweisen,
c) maximal 2 Gew.-% Vernetzermoleküle.

EP 2 110 388 A1

**Beschreibung**

Die Erfindung betrifft eine polymerisierbare Masse auf der Basis von Acrylaten und/oder Methacrylaten sowie unter Verwendung einer solchen Masse hergestellte polymere Werkstoffe. Diese Werkstoffe zeichnen sich durch gute mechanische und optische Eigenschaften bei Raumtemperatur und Umformbarkeit bei erhöhter Temperatur aus.

Polyacrylate und -methacrylate sind im Stand der Technik seit langem bekannt. Sie werden beispielsweise für die Herstellung von Plexiglas oder sogenannten Acrylatkautschuken verwendet. Die guten Eigenschaften dieser Materialien lassen sich durch ein Recken bei Temperaturen oberhalb der Glastemperatur weiter verbessern (DE 4443355).

Die mechanischen Eigenschaften von Polymeren lassen sich durch Füllstoffe verbessern. Aufgrund der verhältnismäßig leichten Verseifbarkeit von Acrylatestergruppen können bei Polyacrylaten nur wenige Füllstoffe Verwendung finden, beispielsweise Ruß. Dieser beeinträchtigt jedoch die häufig gewünschte Transparenz von Polyacrylaten.

Für verschiedene Anwendungen kommen mit anorganischen Nanopartikeln modifizierte Acrylat- und Methacrylatnetzwerke zum Einsatz, hier sind insbesondere Kratzfestbeschichtungen (DE 698 26 226) oder Dentalmaterialien zu nennen (DE 196 17 931). Netzwerke auf der Basis von methacryloxypropylgepfropften $SiO_2$- Nanopartikeln und Methylmethacrylat werden von Mauger et al. beschrieben (Polym Int 53: 378 (2004)). DE 199 33 098 offenbart mit Nanopartikeln modifizierte Bindemittel, die durch Umsetzung von Nanopartikeln mit epoxyfunktionellen Bindemitteln hergestellt werden. Durch diese Umsetzung soll eine besonders gute Verteilung der Nanopartikel in der Matrix erreicht werden.

Der genannte Stand der Technik ist auf eine Erhöhung der Härte, der Kratzfestigkeit oder der Korrosionsbeständigkeit fokussiert. Viele Kunststoffanwendungen setzen jedoch eine Verformbarkeit voraus, z.B. in einer Anwendung als Verglasungsmaterial, beispielsweise als Tunnelgewölbe.

Der Erfindung liegt die Aufgabe zugrunde, eine polymerisierbare Masse der eingangs genannten Art zu schaffen, die vielseitig verwendbar ist und den aus solchen polymerisierbaren Massen herstellbaren Werkstoffen gute mechanische Eigenschaften verleiht. Bei Temperaturen oberhalb der Glasübergangstemperatur Tg des Werkstoffes soll vorzugsweise eine gewisse Dehnbarkeit vorhanden sein, die eine Umformung erlaubt.

Gegenstand der Erfindung ist eine polymerisierbare Masse, die enthält:

a) Acrylate und/oder Methacrylate,

b) 0,1 bis 70 Gew.-% $SiO_2$-Partikel mit einer mittleren Teilchengröße von 1 bis 150 nm, die polymerisierbare Gruppen vom Typ Methacryloyl-, Acryloyl-, Styryl-, Itaconyl-, Crotonyl-, Vinyl-, Allyl- und Alkenylauf der Oberfläche aufweisen,

c) maximal 2 Gew.-% Vernetzermoleküle.

Die erfindungsgemäße polymerisierbare Masse basiert auf Acrylaten und/oder vorzugsweise auf Methacrylaten. Als Füllstoff enthält sie nanoskalige $SiO_2$ Partikel, die auf ihrer Oberfläche polymerisierbare Gruppen aufweisen. Solche polymerisierbaren Gruppen können beispielsweise durch eine geeignete Silanisierung oder eine andere unten beschriebene Modifikation chemisch an die Oberfläche der $SiO_2$ Partikel angebunden werden.

Die Herstellung silanisierter $SiO_2$ Nanopartikel mit polymerisierbaren Gruppen an der Oberfläche ist im Stand der Technik grundsätzlich bereits bekannt. Bspw. können $SiO_2$ Partikel aus Kieselsolen ausgefällt und anschließend mit Organosilanen wie bspw. Vinylsilanen silanisiert werden. Eine solche Herstellung über Fällungskieselsäuren ist bspw. in EP 0 926 170 B1 beschrieben.

Eine andere Möglichkeit ist bspw. beschrieben in J. Colloid Interface Sci 26:62 (1968). Es handelt sich hier um die sogenannte Stöber-Synthese solcher Nanopartikel.

Als Quelle für die unmodifizierten $SiO_2$-Partikel kommen Dispersionen von kolloidalem Siliciumdioxid in Wasser oder Lösungsmitteln in Frage. Dabei ist es unerheblich, ob dieses durch die Hydrolyse von Alkoxysilanen oder nach anderen Verfahren gewonnen wird. Insbesondere eignen sich Partikel, wie sie bei der Kondensation von angesäuertem Wasserglas entstehen. Zahlreiche Verfahren dazu sind in der Literatur beschrieben und eine Reihe von Produkten auf dem kommerziellen Markt erhältlich. Dazu zählen z.B. Bindzil 40/130 und Bindzil 40/220 (Eka Chemicals), Levasil 200/40% (H.C. Starck) oder auch Nalco 2327 und Nalco 2329 (Nalco Company). Beispiele für kommerzielle Lösungsmittelsole sind IPA-ST und MIBK-ST der Firma Nissan Chemical American Corporation.

Die Siliciumdioxidpartikel weisen bevorzugt eine Oberflächenmodifikation zur Funktionalisierung und ggf. zur Kompatibilisierung mit den Monomeren auf. Bekannte und der Fachwelt geläufige Methoden zur Oberflächenfunktionalisierung sind beispielsweise die Silanisierung der Oberfläche, die Alkoholyse, die Verwendung saurer, basischer oder ionischer Verbindungen, die mit der polaren Oberfläche ionische Bindungen eingehen, die radikalische Anbindung von Polymeren und Monomeren, sowie die lediglich physikalische Anhaftung von hydrophoben Polymeren.

Die Silanisierung der Oberfläche der $SiO_2$-Teilchen geschieht bevorzugt mit Organosilanen oder Organosiloxanen. Diese Silanisierung ist eine in der Fachwelt geläufige Technologie.

Die Organosilane oder Organosiloxane sind bevorzugt ausgewählt aus der Gruppe der bestehend aus Organosilanen der Formel $R^1_a SiX_{4-a}$, Organosilanen der Formel $(R^1_3 Si)_b NR^1_{3-b}$ und Organosiloxanen der Formel $R^1_n SiO_{(4-n)/2}$, worin jedes $R^1$ unabhängig voneinander ausgewählt ist aus Kohlenwasserstoffresten mit 1 bis 18 Kohlenstoffatomen oder organofunktionellen Kohlenwasserstoffresten mit 1 bis 18 Kohlenstoffatomen oder ein Wasserstoffatom ist, jedes X unabhängig voneinander auswählt eine hydrolysierbare Gruppe ist, a = 0, 1, 2 oder 3, b = 1, 2 oder 3 und n eine Zahl von 2 bis einschließlich 3 ist. Beispiele für hydrolysierbare Gruppen sind Halogen-, Alkoxy-, Alkenoxy-, Acyloxy-, Oximino- und Aminoxygruppen. Bei den organofunktionellen Kohlenwasserstoffresten sind insbesondere ungesättigte Reste bevorzugt, die reaktiv in einer radikalischen Polymerisation sind. Beispiel für solche organischen Reste sind solche die Methacryloyl, Acryloyl-, Styryl-, Vinyl-, Hexenyl- und Allyl-Funktionalitäten bzw. Gruppen aufweisen.

Zur Funktionalisierung der Partikel mit reaktiven Gruppen kommen beispielsweise Vinyltrimethoxysilan, Vinyltriethoxysilan, Methylvinyldimethoxysilan, Methylvinyldiethoxysilan, Vinyldimethylmethoxysilan, Vinyldimethylethoxysilan, Divinyldimethoxysilan, Divinyldiethoxysilan, Vinyltriacetoxysilan, Vinyltrichlorsilan, Methylvinyldichlorsilan, Dimethylvinylchlorsilan, Divinyldichlorsilan, Vinyltris(2-methoxyethoxy)silan, Hexenyltrimethoxysilan, Gamma-Methacryloxypropyltrimethoxysilan, Gamma-Methacryloxypropyltriethoxysilan, Gamma-Methacryloxypropyltriacetoxysilan, Methacryloxymethyltrimethoxysilan, Methacryloxymethyltriethoxysilan, (Methacryloxymethyl)methyldimethoxysilan, (Methacryloxymethyl)-methyldiethoxysilan, Acryloxypropyltrimethoxysilan, Acryloxypropyltriethoxysilan, Gamma-Methacryloxypropyltrichlorsilan, Gamma-Methacryloxypropyldimethylchlorsilan, Vinylbenzylethylendiaminpropyltrimethoxysilan, Vinylbenzylethylendiaminpropyltrimethoxysilan-Hydrochlorid, Allylethylendiaminepropyltrimethoxysilan, Allylethylendiaminpropyltriethoxysilan, Allyltrichlorsilan, Allylmethyldichlorsilan, Allyldimethylchlorsilan, Allyltrimethoxysilan, Allyltriethoxysilan, Allylmethyldimethoxysilan, Allylmethyldiethoxysilan, Allyldimethylmethoxysilan, Allyldimethylethoxysilan, Divinyltetramethyldisilazan, Divinyltetramethyldisiloxan, Trimethyltrivinylcyclotrisiloxan, Tetramethyltetravinylcyclotetrasiloxan, Pentamethylpentavinylcyclopentasiloxan und Hexamethylhexavinylcyclohexasiloxan in Frage. Es können Mischungen dieser Silane untereinander oder mit unfunktionalisierten Silanen wie z.B. Chlortrimethylsilan oder Octyltrimethoxysilan eingesetzt werden. Die Silanisierung kann auch in mehreren Schritten und unterschiedlichen Lösungsmitteln durchgeführt werden.

Bei einer alternativen Methode zur Oberflächenmodifizierung können die $SiO_2$-Partikel mit Alkoholen, Polyolen oder Mischungen daraus behandelt werden. Durch die Behandlung binden Silanolgruppen auf der Oberfläche des $SiO_2$-Partikels chemisch mit den Hydroxygruppen des Alkohols, so dass an der Oberfläche gebundene Estergruppen entstehen. Diese Technik ist beschrieben bspw. in US-A-2801185. Im Sinne dieser Erfindung ist es bevorzugt, zumindest teilweise ungesättigte primäre Alkohole einzusetzen. Beispiele für solche Alkohole sind Hydroxyethylacrylat, Hydroxyethylmethacrylat, und Allylalkohol.

Eine weitere Methode zur Funktionalisierung ist das Modifizieren der Oberfläche mit Ankergruppen, z.B. funktionalisierten Silanen. Diese Silane verfügen über eine reaktive Gruppe, die in einem zweiten Schritt mit einem Molekül reagieren kann, das selbst über zwei reaktive Gruppen verfügt. Die eine Gruppe reagiert mit dem Silan, die andere ist in der radikalischen Polymerisation reaktiv.

Ebenfalls verwendbar ist ein Halogensilan, beispielsweise ein Chlorsilan. Die Silane können funktionalisiert sein, beispielsweise mit polymerisierbaren Gruppen, insbesondere Vinylgruppen. Im Rahmen der Erfindung ist es möglich, nacheinander zwei Silanisierungsschritte mit unterschiedlichen Silanen durchzuführen. Beispielsweise kann lediglich in einem der beiden Silanisierungsschritte ein funktionalisiertes Silan, bevorzugt ein Vinylsilan, eingesetzt werden. Ebenfalls ist es möglich, Mischungen funktionalisierter und nicht funktionalisierter Silane in einem Silanisierungsschritt einzusetzen.

Die Erfindung hat erkannt, dass diese oberflächenmodifizierten $SiO_2$ Partikel überraschender Weise bei der radikalischen Polymerisation der polymerisierbaren Masse als Vernetzungspunkte wirken können und eine wirksame Vernetzung des ausgehärteten Poly(meth)acrylats herbeiführen. Im Rahmen der Erfindung enthält die polymerisierbare Masse daher keine oder allenfalls eine geringe Menge (maximal 2 Gew.-%) herkömmliche Vernetzermoleküle. Der Begriff Vernetzermoleküle bezeichnet niedermolekulare (bevorzugt monomere) Moleküle mit wenigstens zwei polymerisierbaren Doppelbindungen, die zunächst lineare oder verzweigte makromolekulare Netzwerke zu dreidimensionalen polymeren Netzwerken verknüpfen können. Vernetzer sind definiert in Römpp Chemie-Lexikon, 10. Auflage, Band 6, Seite 4836.

Die Erfindung ermöglicht eine im Vergleich zur herkömmlichen Vernetzermolekülen wesentliche verbesserte Reißdehnung. Beim Einsatz von Vernetzern des Standes der Technik erhält man ein engmaschiges und damit wenig dehnbares Netzwerk. Bei der erfindungsgemäßen polymerisierbaren Masse erhält man durch die eingesetzten oberflächenmodifizierten $SiO_2$ Partikel zwar weniger Netzpunkte, aber eine Mehrzahl von langen Netzbögen "von Netzpunkt zu Netzpunkt", d.h. von Partikel zu Partikel. Ein solches Netzwerk ist dehnbarer und dennoch fest.

Bevorzugt weisen die Acrylate und/oder Methacrylate 1 bis 12, vorzugsweise 1 bis 6 C-Atome in der Alkylkette auf. Die Alkylkette kann linear oder verzweigt sein.

Die polymerisierbare Masse enthält bevorzugt 50 bis 99,5 Gew.-% Acrylate und/oder Methacrylate. Bevorzugt sind Alkylmethacrylate mit Alkyl gleich Methyl, Ethyl, Butyl, Isobutyl, oder Cyclohexyl. Besonders bevorzugt als Monomeres ist Methylmethacrylat. Dieses Monomere ist in einer bevorzugten Ausführungsform zu wenigstens 60 und besonders bevorzugt wenigstens 70 oder 80 Gew.-% in der polymerisierbaren Masse enthalten.

Bevorzugte Untergrenzen für die mittlere Teilchengröße der $SiO_2$ Partikel sind 2 nm, 3 nm, 4 nm und 5 nm. Bevorzugte Obergrenzen sind 100 nm, 75 nm, 50 nm, 30 nm, 25 nm und 20 nm. Die Unter- und Obergrenzen können beliebig zu erfindungsgemäßen Bereichen kombiniert werden. Die Teilchengröße kann in Lösung mittels dynamischer Lichtstreuung auf einem "Dynamic Light Scattering Particle Size Analyzer LB-550" der Firma Horiba bei einer Konzentration von maximal 10 Gew.-% Partikeln erfolgen, wobei die Dispersion maximal eine dynamische Viskosität von 3 mPas bei 25 °C aufweisen darf. Als Teilchengröße wird der Median (D50-Wert) der Partikelgrößenverteilung angeben.

Im Feststoff kann die Teilchengröße per Transmissionselektronenmikroskopie bestimmt werden. Dazu werden mindestens 100 Partikel ausgemessen und eine Partikelgrößenverteilung gebildet.

Die Oberflächenbelegung der $SiO_2$ Teilchen mit polymerisierbaren Gruppen liegt bevorzugt zwischen 0,01 - 10 Gruppen/$nm^2$, weiter vorzugsweise 0,01 - 6 Gruppen/$nm^2$, weiter vorzugsweise 0,01 - 4 Gruppen/$nm^2$ der Oberfläche der Partikel. Bevorzugt ist es, wenn pro $SiO_2$ Partikel zwischen 10 und 2500 polymerisierbare Gruppen an der Oberfläche gebunden sind.

Über die polymerisierbaren Gruppen hinaus können die Partikel auch Gruppen tragen, die nicht in einer Polymerisation reagieren.

Die Oberfläche der Partikel kann für sphärische Partikel aus der Teilchengröße berechnet werden. Für die Berechnung wird der Median der Partikelgrößenverteilung (D50) heran gezogen. Die spezifische Oberfläche ($A_0$) lässt sich dann mit Hilfe der Dichte des Partikels (p) berechnen:

$$A_0 = 6 / (\rho \times D50)$$

Die Dichte von kolloidalem Siliziumdioxid beträgt 2,1 g/$cm^3$.

Die Zahl der reaktiven Gruppen pro Oberflächeneinheit ($n_R^A$) ergibt sich aus dem Quotienten der Zahl reaktiver Gruppen ($n_R^M$) pro Masse dividiert durch die spezifische Oberfläche:

$$n_R = (n_R^M / A_0)$$

Die Zahl reaktiver Gruppen pro Masse $n_R^M$ kann über geeignete analytische Methoden bestimmt werden. Werden Silane des Typs Alkoxy, Acyloxy, Acetoxy, Alkenoxy oder Oximosilane eingesetzt, um die reaktiven Gruppen auf die Oberfläche zu bringen, kann von einer vollständigen Hydrolyse des Silans ausgegangen werden. D.h. alle eingesetzten Gruppen finden sich auf der Oberfläche der Partikel wieder.

Die Bestimmung der Anzahl der polymerisationsfähigen Gruppen auf der Partikeloberfläche kann auch durch NMR Spektroskopie oder mittels DSC (differential scanning calorimetry) erfolgen. Diese Verfahren können insbesondere dann zur Anwendung kommen, wenn geeignete analytische Methoden zur Bestimmung reaktiver Gruppen (bspw. Iodzahlbestimmung bei Vinylgruppen) nicht zur Verfügung stehen. Bei der DSC wird die Polymerisationswärme als Maß für die Zahl der polymerisationsfähigen Gruppen auf der Partikeloberfläche gemessen. Bei dieser DSC Bestimmung wird eine definierte Menge der oberflächenmodifizierten $SiO_2$ Partikel mit einer standardisierten Peroxidlösung versetzt und die Reaktionswärme gemessen. Das Verfahren ist bspw. beschrieben in DE 36 32 215 A1.

Über die polymerisierbaren Gruppen hinaus können die Partikel auch Gruppen tragen, die nicht in einer Polymerisation reagieren.

Bei einer Variante der Erfindung sind auf der Oberfläche der $SiO_2$ Partikel wenigstens zwei verschiedene polymerisierbare Gruppen angeordnet. Diese können insbesondere Acryloyl-, Styryl-, Itaconyl- und/oder Methacryloylgruppen einerseits und Crotonyl-, Vinyl-, Allyl- und/ oder Alkenylgruppen andererseits umfassen.

Eine solche duale Oberflächenmodifizierung der $SiO_2$ Partikel hat den Vorteil, dass polymerisierbare Gruppen mit unterschiedlicher Reaktivität auf die Teilchenoberfläche aufgebracht werden können. Bei der radikalischen Polymerisation reagieren beispielsweise Acryloyl- bzw. Methacryloylgruppen früher als Vinyl- oder insbesondere Allylgruppen. Es ist daher beispielsweise möglich, zunächst bei einer niedrigeren Temperatur von beispielsweise 70°C nur die Methacryloylgruppen auf der Oberfläche der $SiO_2$ Partikel vernetzend reagieren zu lassen und zu einem späteren Zeitpunkt der Polymerisation die Temperatur zu erhöhen, beispielsweise auf 90°C, so dass auch auf der Oberfläche befindliche Allylgruppen reagieren. Alternativ ist es möglich, unterschiedliche und unterschiedlich reaktive Acrylat- bzw. Methacrylatmonomere einzusetzen, die nacheinander zudosiert werden, wobei erst das später zudosierte Monomer mit den Allylgruppen reagiert.

Die $SiO_2$-Partikel bestehen vorzugsweise zu wenigstens 50 % aus vereinzelten, nicht aggregierten oder agglomerierten Primärpartikeln. Weitere bevorzugte Untergrenzen sind 70 %, 80 %, 90 %, 95 % und 98 %. Bei diesen Prozentangaben handelt es sich um Gew.-%. Gemäß diesem Aspekt der Erfindung ist es somit möglich, eine Dispersion zur Verfügung zu stellen, die im Wesentlichen frei ist von Aggregaten und/oder Agglomeraten der $SiO_2$-Partikel. Dies verbessert die Verarbeitbarkeit (geringere Viskosität) und die mechanischen Eigenschaften von damit hergestellten Zwischen- und Endprodukten

Durch Einsatz zwei unterschiedlicher polymerisierbarer Gruppen auf der Teilchenoberfläche und dem sequentiellen Reagierenlassen mit zwei unterschiedlichen Monomeren ist es möglich, ein Polymer entstehen zu lassen, das sich gegenseitig durchdringend zwei verschiedene Polymernetzwerke enthält.

Zur Herstellung einer solchen dualen Oberflächenmodifizierung können die entsprechenden Silane bzw. Siloxane bei der Silanisierung der Siliciumdioxidpartikel in Mischung zur Reaktion gebracht werden.

Es ist bevorzugt, dass der Anteil der Acryloyl-, Styryl-, Itaconyl- und/oder Methacryloylgruppen an den polymerisierbaren Gruppen auf der Oberfläche 95 bis 5% und der Anteil der Crotonyl-, Vinyl-, Allyl- und/ oder Alkenylgruppen an den polymerisierbaren Gruppen auf der Oberfläche 5 bis 95% beträgt.

Bevorzugt ist es, dass die $SiO_2$- Partikel 0,01-3 Methacryloylgruppen/$nm^2$ und zusätzlich 0,01 - 3 Vinylgruppen/$nm^2$ auf der Oberfläche aufweisen. Eine solche duale Oberflächenmodifizierung der $SiO_2$- Partikel hat den Vorteil, dass die $SiO_2$- Partikel in unterschiedlichen Stadien der Polymerisation in die Polymerketten eingebaut werden. So gewährleisten die Methacrylatgruppen auf der Partikeloberfläche, dass bereits in der Anfangsphase der Polymerisation die $SiO_2$-Partikel mit den Polymerketten verbunden werden und durch diese Anbindung eine gute Verteilung der Partikel in der Polymethacrylatmatrix gewährleisten. Demgegenüber kommt die Wirkung der Vinylgruppen besonders bei hohen Umsätzen, also bei der Endpolymerisation, zur Geltung. Durch die duale Modifizierung wird somit das Geschehen am Anfang der Polymerisation mit dem Geschehen bei der Endpolymerisation verknüpft. Auf diesem Wege resultieren homogene, dehnbare Netzwerke.

Die erfindungsgemäßen Polymere weisen nach der Aushärtung lange, von $SiO_2$- Partikel zu $SiO_2$- Partikel reichende Polymernetzbögen, d.h. lange Poly (meth)acrylatketten auf. Dies ist für ein Thermoformen bei hohen Temperaturen, z.B. 180°C, jedoch kritisch, da reine Poly(meth)acrylatketten eine niedrige Ceiling-Temperatur aufweisen (z.B. ca. 160°C für reines PMMA), dazu eine sehr hohe ZIP-Länge (>200). Bei dieser hohen Depolymerisationsneigung kann bei Polymerketten, die nur aus Methacrylat aufgebaut sind, z.B. Ketten mit MMA als Hauptbestandteil und den Methacryloxypropylgruppen der $SiO_2$- Partikeloberfläche als weiterem Bestandteil, ein Kettenbruch zur schnellen Depolymerisation der Polymethacrylatketten und damit zu einer deutlichen Reduktion des ursprünglich hohen Molekulargewichts von z.B. 1.000.000 Daltons führen.

In einer bevorzugten Ausführungsform enthält die polymerisierbare Masse daher zusätzlich als Depolymerisationsbremse wirkende Monomere mit einer ZIP-Länge von 1 oder weniger. Bevorzugt sind die Monomere ausgewählt aus der Gruppe bestehend aus C1 bis C8-Alkylacrylaten, bevorzugt aus der Gruppe bestehend aus Methyl-, Ethyl-, Butyl- und 2-Ethylhexylacrylat. Die polymerisierbare Masse kann bspw. 0,1 bis 20 Gew.-%, vorzugsweise 0,2 bis 10 Gew.-%, weiter vorzugsweise 0,5 bis 5 Gew.-% der als Depolymerisationsbremse wirkenden Monomere enthalten.

Wie die Alkylacrylate verringern auch Vinylgruppen auf der Oberfläche der $SiO_2$- Partikel als Copolymerisationsbestandteil ein schnelles Depolymerisieren der Polymerketten nach Kettenbruch. Bevorzugt sind daher Rezepturen zur Herstellung der Polymernetzwerke, die $SiO_2$- Partikel mit 0,2 - 3 Vinylgruppen / $nm^2$ auf der Oberfläche enthalten und zusätzlich 0,5 - 5 Gew.-% Alkylacrylat.

Der Begriff Glasübergangstemperatur Tg bezeichnet die Glasübergangstemperatur der erfindungsgemäßen Masse nach deren Polymerisation (Aushärtung). Die Glasübergangstemperaturen entsprechender Homopolymerisate sind bekannt und bspw. aufgelistet in J.Brandrup, E.H. Immergut, Polymer Handbook 1st Ed. J. Wiley, New York, 1975.

Die Glastemperatur eines Mischpolymerisates kann nach der sogenannten Fox-Gleichung berechnet werden (T.G. Fox, Bull. Am. Phys. Soc. (Ser. II], 1, 123 [1956]).

Bevorzugt werden die Monomerbestandteile so gewählt, dass nach deren Polymerisation eine Glastemperatur > 50 °C, bevorzugt > 100 °C resultiert. Diese Ausführungsform ist besonders geeignet zur Herstellung fester, dehnbarer Acrylate wie beispielsweise Flugzeugverglasungen.

Bevorzugt für den Aufbau weitmaschiger Netzwerke ist die Abwesenheit niedermolekularer Vernetzer, eine relativ geringe Anzahl von polymerisierbaren Gruppen auf den als Vernetzer wirkenden $SiO_2$- Partikeln und der Einsatz sehr geringer Initiatormengen in der Anfangsphase der Polymerisation. Der Einsatz zu hoher Initiatorkonzentrationen führt zur Ausbildung von kurzen Polymerketten und damit zu kurzen Netzbögen, bzw. zu Polymerketten, die zu kurz sind, um zwei $SiO_2$- Partikel miteinander zu verknüpfen.

Von Bedeutung ist dabei nicht die insgesamt eingesetzte I-nitiatormenge, sondern die unter Polymerisationsbedingungen zerfallene. So zerfällt beispielsweise bei 80 °C innerhalb von 1h die Hälfte des eingesetzten Didodecanoylperoxids, bei 62 °C dagegen nur etwa 5 %.

Der Anteil der Vernetzermoleküle in der erfindungsgemäßen polymerisierbaren Masse liegt bevorzugt bei maximal 1 Gew.-%, weiter vorzugsweise maximal 0,5 Gew.-%, weiter vorzugsweise maximal 0,2 Gew.-%. Bei einer weiteren bevorzugten Ausführungsform sind keine technisch relevanten Mengen von Vernetzermolekülen in der polymerisierbaren Masse enthalten. Die Vernetzerfunktion wird ausschließlich von den oberflächenmodifizierten $SiO_2$ Partikeln wahrgenommen.

Bevorzugt kann der Gehalt an oberflächenmodifizierten $SiO_2$-Partikeln zwischen 0,5 und 5 Gew.-%,

weiter vorzugsweise 1 und 2 Gew.-% liegen. Die genannte Variante der Erfindung ist beispielsweise durch Gusspolymerisation zu einem Werkstoff wie beispielsweise einer Flugzeugverglasung zu verarbeiten.

Bei solchen aus einer erfindungsgemäßen Masse hergestellten Gusspolymeren handelt es sich um Poly(meth)acrylate mit verbesserter Korrosionsbeständigkeit. Sie können gereckt, bevorzugt biaxial gereckt werden und bilden dann ein transparentes Acrylglas mit guter Zähigkeit und guten optischen Eigenschaften (Transparenz). Sie eignen sich somit insbesondere zur Herstellung oben bereits genannter Flugzeugverglasungen.

Gegenstand der Erfindung ist ferner ein polymerer Werkstoff, erhältlich durch Aushärten einer erfindungsgemäßen polymerisierbaren Masse.

Gegenstand der Erfindung ist weiter ein polymerer Werkstoff, erhältlich durch folgendes Verfahren:

a) Erwärmen eines polymeren Werkstoffs nach Anspruch 18 auf eine Temperatur T > Tg, vorzugsweise T > Tg + 10 K, weiter vorzugsweise T > Tg + 40 K, weiter vorzugsweise T > Tg + 50 K;

b) Dehnen oder Stauchen des Werkstoffs um wenigstens 5%, vorzugsweise wenigstens 10% in wenigstens einer Raumrichtung;

c) Abkühlen des Werkstoffs unter Last auf eine Temperatur T < Tg.

Ein solcher gereckter Werkstoff kann bspw. zur Herstellung einer Verglasung (Flugzeugverglasung) oder eines medizintechnischen Werkstoffes wie bspw. einer dentalen Polymerfolie verwendet werden.

Gegenstand der Erfindung ist weiter ein Verfahren zur Herstellung eines polymeren Werkstoffs nach einem der Ansprüche 13 bis 14, mit den Schritten:

a) zur Verfügung stellen einer polymerisierbaren Masse nach einem der Ansprüche 1 bis 11;

b) Hinzufügen eines Polymerisationsinitiators;

c) Durchführen einer teilweisen Polymerisation bei einer Temperatur T < Tg, bevorzugt T < Tg - 10 K, weiter bevorzugt T < Tg - 20K (Tg des herzustellenden Werkstoffs), bis wenigstens 50% der eingesetzten Monomeren polymerisiert sind;

d) Vervollständigung der Polymerisation bei einer Temperatur T > Tg - 20 K, bevorzugt T > Tg - 10 K, weiter bevorzugt T > Tg.

Bevorzugt wird unter Einsatz von Radikalbildnern wie thermisch zerfallenden Initiatoren, Redoxinitiatoren oder UV-Initiatoren derart polymerisiert, dass mehr als 50% (bevorzugt mehr als 70%) der vorhandenen Monomeren mit einer wirksamen Initiatorkonzentration von 10- 200 Mol Initiator / 1.000.000 Mol Monomer polymerisiert wird und anschließend bei T > Tg die Polymerisation vervollständigt wird.

Bevorzugt umfasst das Verfahren die folgenden weiteren Schritte:

e) Erwärmen des polymeren Werkstoffs auf eine Temperatur T > Tg, vorzugsweise T > Tg + 10 K, weiter vorzugsweise T > Tg + 40 K, weiter vorzugsweise T > Tg + 50 K;

f) Dehnen oder Stauchen des Werkstoffs um wenigstens 5%, vorzugsweise wenigstens 10% in wenigstens einer Raumrichtung;

g) Abkühlen des Werkstoffs unter Last auf eine Temperatur T < Tg.

Die derart hergestellten thermoformbaren Gegenstände werden mit Vorteil für ganz unterschiedliche Anwendungen eingesetzt. In erster Linie stellen diese Gegenstände mechanisch und optisch hochwertige Verglasungsmaterialien dar, die in weiten Grenzen thermoformbar sind, ohne zu fließen. Besonders in gereckter Form ist der Einsatz als Flugzeugverglasungsmaterial von Interesse.

Interessant erscheint auch - z.B. bei Zusatz geringer Mengen Phosporsäure oder Phosphorsäureester- der Einsatz gereckter Materialien für schwer entflammbare Verglasungen.

Eine weitere Anwendung ist im Einsatz der gereckten Materialien als wärmerückstellbarer Werkstoff, z.B. als witterungsbeständige, schrumpfbare und transparente UV- Schutzfolie zu sehen.

Ganz allgemein lassen sich thermogeformte Gegenstände als Formgedächtniswerkstoffe einsetzen. Dabei ist von Interesse, dass die durch Verformung über Tg aufgezwungene Form nicht nur durch Erwärmen über Tg sondern auch durch Einwirkung von Quellungsmitteln wie z.B. Monomeren relaxiert werden kann. Dies ist für den Einsatz dieser Formgedächtniswerkstoffe als medizintechnischer Werkstoff, z.B. als Dentalfolie von Interesse.

Ausführungsbeispiele der Erfindung werden nachfolgend beschrieben.

Herstellung einer kolloidalen Dispersion von Siliciumdioxid in Methylmethacrylat (P1)

Ein kolloidales Kieselsol (40 Gew.-% $SiO_2$ in Wasser, Teilchengröße (D50) per dynamischer Lichtstreuung: 25 nm, stabilisiert mit NaOH) wurde über einem sauren Ionentauscher (Amberjet 1200H, Rohm&Haas) gerührt, bis ein pH-Wert von 2-3 erreicht war. Nach der Filtration vom Ionentauscher wurden 600 g des sauren Sols mit 17,7 g Gamma-Methacryloxypropyltrimethoxysilan und 10,7 g Vinyltrimethoxysilan für 60 min gerührt.

Das Sol wurde mit 2000 g Isopropanol verdünnt und unter Zugabe von 1500 g Isopropanol unter reduziertem Druck bei 45 °C ca. 3500 g Lösungsmittel-Wasser-Gemisch abdestilliert. Es wurden 637 g Sol erhalten, die mit 1600 g Methylmethacrylat (Stabilisiert mit 50 ppm Methoxyhydrochinon) verdünnt wurden. Das Isopropanol wurde unter reduziertem Druck abdestilliert, wobei zwischenzeitlich weitere 260 g Methylmethacrylat dazu gegeben wurden.

Man erhielt ein klares Sol von 42,8 Gew.-% $SiO_2$-Partikeln in MMA, wobei die Partikel 1,6 mmol Vinylgruppen / $nm^2$ (aus Vinyltrimethoxysilan) und 1,6 mmol / $nm^2$ Methacrylgruppen (aus Gamma-Methacryloxypropyltrimethoxysilan) auf der Oberfläche aufweisen.

Beispiel 1: Thermoformbare Platte mit 1,7 Gew.% $SiO_2$-Partikel

Eine Mischung aus

|        |                                    |
|--------|------------------------------------|
| 0,07g  | Didodecanoylperoxid                |
| 0,11g  | Benzoylperoxid (mit 25 Gew.% Wasser) |
| 1,00g  | Ethylacrylat                       |
| 47,00g | Methylmethacrylat und              |
| 2,00g  | P1                                 |

wird entgast (ca. 20 mbar) und bei Raumtemperatur in eine Polymerisationskammer gefüllt. Außenmasse der Polymerisationskammer: 150 x 200 mm. Aufbau der Kammer: Glasplatte / PET- Folie (Hostaphan RN von Mitsubishi Film GmbH) / Distanzschnur (3 mm) / Glasplatte.

Anschließend wird im Wasserbad zunächst 3 h bei 70 °C und darauf 2 h bei 85 °C polymerisiert. Zur Endpolymerisation wird 2 h bei 110 °C im Wärmeschrank getempert.

Man erhält eine farblose, transparente, harte Platte, die sich gut mechanisch bearbeiten (z.B. sägen) lässt.

Thermoformversuch

Zur Überprüfung des Thermoformverhaltens wird aus der etwa 3 mm dicken Platte ein ca. 40 x 80 mm großes Stück heraus gesägt und bei 150 °C einem Biegeversuch unterworfen. Dazu wird die Platte an den Längsenden eingespannt und in einem Wärmeschrank über einen Glasstab (Durchmesser 14 mm) gebogen. Dauer des Umformvorgangs: 20 min, anschließend wird auf Raumtemperatur abgekühlt. Man erhält eine glasklare, um 90° abgewinkelte Kunststoffplatte. Der Biegeradius an der Stelle der Biegung beträgt ca. 10 mm. Dies entspricht einer Dehnung/ Stauchung von > 10 %.

Untersuchung des Rückstellverhaltens

Der so hergestellte Kunststoffwinkel wird ohne Last 10 min auf 150 °C erwärmt. Man erhält eine glatte, ebene Platte zurück (kein erkennbarer Verformungsrest).

Beispiel 2: Thermoformbare Platte mit 0,85 Gew.-% $SiO_2$-Partikel

Man wiederholt den Polymerisationsversuch gemäß Beispiel 1, wählt jedoch eine andere Zusammensetzung: Einwaagen: 0,04 g Didodecanoylperoxid, 0,10 g Dibenzoylperoxid, 1 g Ethylacrylat, 48 g Methylmethacrylat, 1,0 g P1.

Man erhält eine farblose, transparente, harte Platte.

Thermoformversuch

Man verfährt wie in Beispiel 1, wählt jedoch als Auflage zur Biegung einen nur 6 mm dicken Glasstab, Temperatur: 150 °C, Dauer des Biegevorgangs: 20 min.

Man erhält eine glasklare, um 90° abgewinkelte Kunststoffplatte. Der Biegeradius beträgt ca. 6 mm.

Beispiel 3: Thermoformbare Platte mit 3,4 Gew.-% $SiO_2$-Partikel

Man wiederholt den Versuch gemäß Beispiel 2, wählt jedoch eine andere Zusammensetzung: Einwaagen: 1 g Ethylacrylat, 45 g Methylmethacrylat, 4 g P1.

In diesem Fall wird die Polymerisationskammer auf beiden Seiten mit PET- Folie begrenzt.

Man erhält eine farblose, transparente, harte Platte.

Thermoformversuch

Durchführung des Biegeversuchs wie in Beispiel 1.

Biegung über einen Glasstab (Durchmesser 14 mm), Temperatur im Wärmeschrank 170 °C, Dauer des Umformvorgangs: 30 min, anschließend wird auf Raumtemperatur gekühlt. Man erhält eine glasklare, um 90° abgewinkelte Kunststoffplatte. Der Biegeradius an der Stelle der Biegung beträgt ca. 10 mm.

**Patentansprüche**

1. Polymerisierbare Masse, **dadurch gekennzeichnet, dass** sie aufweist:

   a) Acrylate und/oder Methacrylate,
   b) 0,05 bis 70 Gew.-% $SiO_2$-Partikel mit einer mittleren Teilchengröße von 1 bis 150 nm, die polymerisierbare Gruppen vom Typ Methacryloyl-, Acryloyl, Styryl-, Itaconyl-, Crotonyl-, Vinyl-, Allyl- und/ oder Alkenyl- auf der Oberfläche aufweisen,

c) maximal 2 Gew.-% Vernetzermoleküle.

2. Polymerisierbare Masse nach Anspruch 1, **dadurch gekennzeichnet, dass** sie 50 bis 99,5 Gew.-% Acrylate und/oder Methacrylate enthält.

3. Polymerisierbare Masse nach Anspruch 2, **dadurch gekennzeichnet, dass** sie wenigstens 60 Gew.-%, vorzugsweise wenigstens 70 Gew.-%, weiter vorzugsweise wenigstens 80 Gew.-% Methylmethacrylat enthält.

4. Polymerisierbare Masse nach einem der Ansprüche 1 bis 3, **dadurch gekennzeichnet, dass** die mittlere Teilchengröße der $SiO_2$-Partikel vorzugsweise wenigstens 2 nm, weiter vorzugsweise wenigstens 3 nm, weiter vorzugsweise wenigstens 4 nm, weiter vorzugsweise wenigstens 5 nm beträgt; und dass die mittlere Teilchengröße der $SiO_2$-Partikel vorzugsweise höchstens 100 nm, weiter vorzugsweise höchstens 75 nm, weiter vorzugsweise höchstens 50 nm, weiter vorzugsweise höchstens 30 nm, weiter vorzugsweise höchstens 25 nm, weiter vorzugsweise höchstens 20 nm beträgt.

5. Polymerisierbare Masse nach einem der Ansprüche 1 bis 4, **dadurch gekennzeichnet, dass** die $SiO_2$-Partikel polymerisierbare Gruppen in einer Konzentration von 0,01 - 10 Gruppen/nm$^2$, vorzugsweise 0,01 - 6 Gruppen/nm$^2$, weiter vorzugsweise 0,01 - 4 Gruppen/nm$^2$ der Oberfläche der Partikel aufweisen.

6. Polymerisierbare Masse nach einem der Ansprüche 1 bis 5, **dadurch gekennzeichnet, dass** die $SiO_2$-Partikel zu wenigstens 50%, vorzugsweise wenigstens 70%, weiter vorzugsweise wenigstens 80%, weiter vorzugsweise wenigstens 90% aus vereinzelten, nicht aggregierten oder agglomerierten Primärpartikeln bestehen.

7. Polymerisierbare Masse nach einem der Ansprüche 1 bis 6, **dadurch gekennzeichnet, dass** auf der Oberfläche der $SiO_2$-Partikel wenigstens zwei verschiedene polymerisierbare Gruppen angeordnet sind; wobei vorzugsweise die verschiedenen polymerisierbaren Gruppen Acryloyl-, Methacryloyl-, Itaconyl- und/oder Styrylgruppen einerseits und Crotonyl-, Vinyl-, Allyl- und/ oder Alkenylgruppen andererseits umfassen; wobei weiter vorzugsweise der Anteil der Acryloyl-, Methacryloyl-, Itaconyl- und/ oder Styrylgruppen an den polymerisierbaren Gruppen auf der Oberfläche 95 bis 5% und der Anteil der Crotonyl-, Vinyl-, Allyl- und/ oder Alkenylgruppen an den polymerisierbaren Gruppen auf der Oberfläche 5 bis 95% beträgt.

8. Polymerisierbare Masse nach Anspruch 7, **dadurch gekennzeichnet, dass** die $SiO_2$- Partikel 0,01 - 3 Methacryloylgruppen und zusätzlich 0,01 - 3 Vinylgruppen/nm$^2$ auf der Oberfläche aufweisen.

9. Polymerisierbare Masse nach einem der Ansprüche 1 bis 8, **dadurch gekennzeichnet, dass** sie zusätzlich als Depolymerisationsbremse wirkende Monomere mit einer ZIP-Länge von 1 oder weniger enthält; wobei die Monomere vorzugsweise ausgewählt sind aus der Gruppe bestehend aus C1 bis C8-Alkylacrylaten, Styrol, Itatonaten, N-Alkylmaleinimiden und N-Arylmaleinimiden; weiter vorzugsweise ausgewählt sind aus der Gruppe bestehend aus Methyl-, Ethyl-, Butyl- und 2-Ethylhexylacrylat.

10. Polymerisierbare Masse nach Anspruch 9, **dadurch gekennzeichnet, dass** sie 0,1 bis 20 Gew.-%, vorzugsweise 0,2 bis 10 Gew.-%, weiter vorzugsweise 0,5 bis 5 Gew.-% der als Depolymerisationsbremse wirkenden Monomere enthält.

11. Polymerisierbare Masse nach einem der Ansprüche 1 bis 10, **dadurch gekennzeichnet, dass** der Anteil der Vernetzermoleküle maximal 1 Gew.-%, vorzugsweise maximal 0,5 Gew.-%, weiter vorzugsweise maximal 0,2 Gew.-% beträgt.

12. Polymerisierbare Masse nach einem der Ansprüche 1 bis 11, **dadurch gekennzeichnet, dass** der Gehalt an $SiO_2$-Partikeln 0,05 bis 5 Gew.-%, vorzugsweise 0,05 bis 3 Gew.-%, weiter vorzugsweise 0,1 bis 2 Gew.-% beträgt.

13. Polymerer Werkstoff, erhältlich durch Aushärten einer polymerisierbaren Masse nach einem der Ansprüche 1 bis 12; wobei der polymere Werkstoff vorzugsweise ein thermoformbarer Gegenstand, ein Formgedächtniswerkstoff oder ein gerecktes Verglasungsmaterial ist.

14. Gereckter polymerer Werkstoff nach Anspruch 13, erhältlich durch folgendes Verfahren:

a) Erwärmen eines polymeren Werkstoffs nach Anspruch 18 auf eine Temperatur T > Tg, vorzugsweise T > Tg + 10 K, weiter vorzugsweise T > Tg + 40 K, weiter vorzugsweise T > Tg + 50 K;
b) Dehnen oder Stauchen des Werkstoffs um wenigstens 5%, vorzugsweise wenigstens 10% in wenigstens einer Raumrichtung;
c) Abkühlen des Werkstoffs unter Last auf eine Temperatur T < Tg.

15. Verwendung eines polymeren Werkstoffs gemäß einem der Ansprüche 13 oder 14 zur Herstellung einer Verglasung oder eines medizintechnischen Werkstoffs.

16. Verfahren zur Herstellung eines polymeren Werkstoffs nach einem der Ansprüche 13 oder 14, mit den Schritten:

a) zur Verfügung stellen einer polymerisierbaren Masse nach einem der Ansprüche 1 bis 11;
b) Hinzufügen eines Polymerisationsinitiators;
c) Durchführen einer teilweisen Polymerisation bei einer Temperatur $T < T_g$, bevorzugt $T < T_g - 10$ K, weiter bevorzugt $T < T_g - 20K$ ($T_g$ des herzustellenden Werkstoffs), bis wenigstens 50% der eingesetzten Monomeren polymerisiert sind;
d) Vervollständigung der Polymerisation bei einer Temperatur $T > T_g - 20$ K, bevorzugt $T > T_g - 10$ K, weiter bevorzugt $T > T_g$.

17. Verfahren nach Anspruch 16, **dadurch gekennzeichnet, dass** es weiter folgende Schritte umfasst:

e) Erwärmen des polymeren Werkstoffs auf eine Temperatur $T > T_g$, vorzugsweise $T > T_g + 10$ K, weiter vorzugsweise $T > T_g + 40$ K, weiter vorzugsweise $T > T_g + 50$ K;
f) Dehnen oder Stauchen des Werkstoffs um wenigstens 5%, vorzugsweise wenigstens 10% in wenigstens einer Raumrichtung;
g) Abkühlen des Werkstoffs unter Last auf eine Temperatur $T < T_g$.

**Europäisches**
**Patentamt**

**EUROPÄISCHER RECHERCHENBERICHT**

Nummer der Anmeldung

EP 08 00 7580

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 505 230 A (RHONE POULENC CHIMIE [FR]) 23. September 1992 (1992-09-23) | 1-17 | INV. C08F220/14 C08F2/44 C08K9/06 |
| Y | * Beispiel 1 * <br> * Seite 5, Zeile 48 * <br> * Seite 6, Zeile 33 * <br> * Seite 6, Zeile 28 * <br> ----- | 7,8 | |
| X | WO 98/59388 A (UNIV NORTH CAROLINA [US]; UNIV MICHIGAN [US]; KHAN SAAD A [US]; FEDKIW) 30. Dezember 1998 (1998-12-30) | 1-17 | |
| Y | * Beispiel 5 * <br> ----- | 7,8 | |
| A | WO 00/73393 A (3M INNOVATIVE PROPERTIES CO [US]) 7. Dezember 2000 (2000-12-07) | 1-17 | |
| Y | * Seite 9, Spalte 14 * <br> * Beispiel 4 * <br> ----- | 7,8 | |

RECHERCHIERTE SACHGEBIETE (IPC)

C08F

Der vorliegende Recherchenbericht wurde für alle Patentansprüche erstellt

| Recherchenort | Abschlußdatum der Recherche | Prüfer |
|---|---|---|
| Den Haag | 18. September 2008 | Friederich, Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 08 00 7580

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-09-2008

| Im Recherchenbericht angeführtes Patentdokument | Datum der Veröffentlichung | Mitglied(er) der Patentfamilie | Datum der Veröffentlichung |
|---|---|---|---|
| EP 0505230 A | 23-09-1992 | FR 2674251 A1<br>JP 2042320 C<br>JP 5115772 A<br>JP 7063614 B | 25-09-1992<br>09-04-1996<br>14-05-1993<br>12-07-1995 |
| WO 9859388 A | 30-12-1998 | AU 8260498 A<br>EP 1038330 A1<br>US 5965299 A | 04-01-1999<br>27-09-2000<br>12-10-1999 |
| WO 0073393 A | 07-12-2000 | AU 4710000 A<br>CN 1352672 A<br>DE 60012523 D1<br>DE 60012523 T2<br>EP 1187881 A1<br>JP 2003501511 T<br>US 6299799 B1 | 18-12-2000<br>05-06-2002<br>02-09-2004<br>21-07-2005<br>20-03-2002<br>14-01-2003<br>09-10-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4443355
- DE 69826226
- DE 19617931
- DE 19933098
- EP 0926170 B1
- US 2801185 A
- DE 3632215 A1

**In der Beschreibung aufgeführte Nicht-Patentliteratur**

- **Mauger et al.** *Polym Int,* 2004, vol. 53, 378
- *J. Colloid Interface Sci,* 1968, vol. 26, 62
- Römpp Chemie-Lexikon. vol. 6, 4836
- **J.Brandrup ; E.H. Immergut.** Polymer Handbook. J. Wiley, 1975
- **T.G. Fox.** *Bull. Am. Phys. Soc. (Ser. II,* 1956, vol. 1, 123